# EUROPÄISCHE PATENTSCHRIFT

(11) **EP 2 581 255 B1**
(45) Veröffentlichungstag und Bekanntmachung des Hinweises auf die Patenterteilung: **29.04.2015**
(21) Anmeldenummer: 11008185.8
(22) Anmeldetag: 10.10.2011
(51) Int. Cl.: B60K 17/344, B60K 6/00

(54) **Fahrzeugantrieb mit einer Brennkraftmaschine, Verteilergetriebe, schienenungebundenes Fahrzeug oder schienengebundenes Fahrzeug und Verfahren zum Betreiben eines eine Brennkraftmaschine aufweisenden Fahrzeugs**
Vehicle drive with a combustion engine, distributor gear, rail vehicle or non-rail vehicle and method for operating a vehicle comprising a combustion engine
Entraînement de véhicule doté d'un moteur à combustion interne, boîte de transfert, véhicule roulant sur rails ou ne roulant pas sur rails, et procédé de fonctionnement d'un véhicule comportant un moteur à combustion interne

(43) Veröffentlichungstag der Anmeldung: 17.04.2013
(73) Patentinhaber: Merkt, Oliver, 56745 Bell (DE)
(72) Erfinder: Merkt, Oliver, 56745 Bell (DE)
(74) Vertreter: Bittner, Bernhard

(56) Entgegenhaltungen:
- GB-A- 2 304 835
- US-A1- 2004 220 007
- US-A1- 2011 079 454

## Beschreibung

Die Erfindung betrifft einerseits einen Fahrzeugantrieb mit einer Brennkraftmaschine zum Bereitstellen einer Antriebsleistung, mit einem Antriebsstrang zum Übertragen der Antriebsleistung an mehrere Abtriebseinrichtungen, mit einem Fahrgetriebe zum Wählen von Antriebsübersetzungen und mit wenigstens einem Verteilergetriebe zum Verteilen der Antriebsleistung an die Abtriebseinrichtungen, bei welchem das wenigstens eine Verteilergetriebe mittels eines Abtriebswellenelements des Fahrzeuggetriebes treibbar in dem Antriebsstrang angeordnet ist.

Andererseits betrifft die Erfindung ein Verteilergetriebe mit einem Treibwelleneingang zum Treiben des Verteilergetriebes mittels einer Antriebsvorrichtung eines Fahrzeugantriebs und mit wenigstens einem Treibwellenausgang zum Treiben wenigstens einer Abtriebseinrichtung.

Auch betrifft die Erfindung ein schienenungebundenes Fahrzeug mit einem Fahrzeugantrieb oder ein schienengebundenes Fahrzeug mit einem Fahrzeugantrieb.

Des Weiteren betrifft die Erfindung ein Verfahren zum Betreiben eines eine Brennkraftmaschine aufweisenden Fahrzeugs, bei welchem eine durch die Brennkraftmaschine bereitgestellte Antriebsleistung mittels eines Verteilergetriebes an verschiedene Abtriebseinrichtungen verteilt wird und bei welchen mittels der Brennkraftmaschine sowohl das Fahrzeug selbst als auch ein dem Fahrzeug zugeordnetes Arbeitsgerät angetrieben werden kann.

Gattungsgemäße Fahrzeugantriebe sind aus dem Stand der Technik gut bekannt und werden speziell bei Lastkraftfahrzeugen bzw. Nutzkraftfahrzeugen eingesetzt, wobei mittels wenigstens einem Verteilergetriebe die zur Verfügung stehende Antriebsleistung auf unterschiedliche Abtriebseinrichtungen verteilt werden kann. Beispielsweise wird dieses Verteilergetriebe neben dem eigentlichen Fahrgetriebe des Kraftfahrzeugs auch für eine sogenannte Kriechfahrt des Kraftfahrzeugs eingesetzt, welche hauptsächlich dafür vorgesehen ist, dass das Kraftfahrzeug möglichst langsam vorwärts oder seltener rückwärts bewegt werden kann. Beispielsweise kann dies der Fall sein, wenn ein Arbeitsgerät mittels des Kraftfahrzeugs bewegt wird, bei welchem eine möglichst langsame Fortbewegung erforderlich ist.

Es ist Aufgabe vorliegender Erfindung, gattungsgemäße, wie z.B. aus US 2011/079454 bekannte Fahrzeugantriebe derart weiterzuentwickeln, dass ein besonders langsames Fahren bzw. Vorwärtsbewegen eines Kraftfahrzeugs problemlos möglich ist.

Die Aufgabe der Erfindung wird einerseits von einem Fahrzeugantrieb mit einer Brennkraftmaschine zum Bereitstellen einer Antriebsleistung, mit einem Antriebsstrang zum Übertragen der Antriebsleistung an mehrere Abtriebseinrichtungen, mit einem Fahrgetriebe zum Wählen von Antriebsübersetzungen und mit wenigstens einem Verteilergetriebe zum Verteilen der Antriebsleistung an die Abtriebseinrichtungen gelöst, bei welchem das wenigstens eine Verteilergetriebe mittels eines Abtriebswellenelements des Fahrgetriebes treibbar in dem Antriebsstrang angeordnet ist, wobei der Fahrzeugantrieb zum kumulativen oder alternativen Treiben des wenigstens einen Verteilergetriebes eine weitere Antriebsvorrichtung umfasst.

Erfindungsgemäß kann das Verteilergetriebe zumindest teilweise mittels der weiteren Antriebsvorrichtung kumulativ oder alternativ angetrieben werden, sodass zumindest eine eingangsseitige Eingangswelle bzw. vorzugsweise mindestens zwei ausgangsseitige Ausgangswelle des Verteilergetriebes mit einer besonders geringen Drehzahl, jedoch trotzdem sehr drehmomentstark angetrieben werden können.

Der Begriff "Fahrzeugantrieb" beschreibt im Sinne der Erfindung im Wesentlichen einen eine Brennkraftmaschine umfassenden Antriebsstrang eines Kraftfahrzeugs. Anstelle der Brennkraftmaschine könnte gegebenenfalls als Antriebsvorrichtung bzw. Hauptantriebsmotor auch ein Elektromotor zum Einsatz kommen.

Im Gegensatz hierzu stellt die weitere Antriebsvorrichtung lediglich einen Nebenantriebsmotor hinsichtlich des Fahrzeugantriebs dar, mittels welcher das Verteilergetriebe zumindest bereichsweise angetrieben werden kann.

Der Begriff "Antriebsstrang" erfasst im Sinne der Erfindung wiederum erforderliche Komponenten, wie Wellenelemente, zum Übertragen einer von der Brennkraftmaschine bereitgestellten Antriebsleistung bis an die jeweilige Abtriebseinrichtung.

In den Antriebsstrang ist insbesondere ein Fahrgetriebe integriert, wobei der Begriff "Fahrgetriebe" im Sinne der Erfindung das Hauptgetriebe zum Auswählen eines Ganges des Kraftfahrzeugs. Beispielsweise ist das Fahrgetriebe als manuelles Schaltgetriebe ausgestaltet.

Insofern unterscheidet sich das vorliegende Fahrgetriebe von anderen Nebengetrieben des Fahrzeugantriebs, wie beispielsweise auch dem hier immer vorhandenen Verteilergetriebe, wobei das Verteilergetriebe vorliegend einerseits wenigstens zwei Eingangswellen und andererseits vorzugsweise wenigstens zwei Ausgangswellen aufweist und es darüber hinaus eine an einer der beiden Eingangswellen bereitgestellte Antriebsleistung auf die wenigstens zwei Ausgangswellen verteilen kann.

Speziell unter diesem Gesichtspunkt wird die Aufgabe der Erfindung ebenfalls von einem Verteilergetriebe mit einem Treibwelleneingang zum Treiben des Verteilergetriebes mittels einer Antriebsvorrichtung eines Fahrzeugantriebs und mit wenigstens einem Treibwellenausgang zum Treiben wenigstens einer Abtriebseinrichtung gelöst, wobei das Verteilergetriebe zumindest einen weiteren Treibwelleneingang für eine weitere Antriebsvorrichtung aufweist, und wobei die beiden Treibwelleneingänge schaltbar sind.

Vorzugsweise handelt es sich bei dem weiteren Treibwelleneingang um eine Zwischenwelle des Verteilergetriebes, welche bisher nicht im Sinne der Erfindung als Eingangswelle zum Realisieren eines Kriechfahrtantriebs genutzt wurde.

Um diese Zwischenwelle konstruktiv besonders einfach als Eingangswelle für einen Kriechfahrtantrieb nutzen zu können, wird sie aufgebohrt und in die Bohrung wird ein Wellenstück eingeschrumpft, sodass eine besonders drehmomentstarke Leistungsübertragung konstruktiv einfach zur Verfügung steht.

Der Begriff "schaltbar" beschreibt im Sinne vorliegender Erfindung die Funktion, dass das Verteilergetriebe entweder über den ersten oder den zweiten Treibwelleneingang angetrieben werden kann.

Insofern wird das Verteilergetriebe entweder direkt über ein Abtriebswellenelement des Fahrgetriebes angesteuert oder mittels der weiteren Antriebsvorrichtung.

Eine derartige Schaltbarkeit der beiden Treibwelleneingänge kann jedoch auch mittels weiterer Kupplungseinrichtungen erzielt werden, die zwischen dem Fahrgetriebe und dem Verteilergetriebe bzw. der weiteren Antriebsvorrichtung und/oder der weiteren Antriebsvorrichtung und dem Verteilergetriebe wirkend angeordnet sind.

Hierdurch ist eine vorteilhafte Sicherungseinrichtung in dem Fahrzeugantrieb integriert, um kritische Antriebssituationen insbesondere an dem Verteilergetriebe zu vermeiden, beispielsweise dass beide Treibwelleneingänge aktiv angesprochen und aktiviert sind.

Insofern ist eine derartige Schaltbarkeit der beiden Treibwelleneingänge besonders vorteilhaft.

Erscheint es vorteilhaft, könnten bei entsprechend konstruierten Verteilergetrieben erste Verteilergetriebewelle über den ersten Treibwelleneingang und zweite Verteilergetriebewellen über den zweiten Treibwelleneingang angetrieben werden.

Idealerweise handelt es sich bei der weiteren Antriebsvorrichtung um eine Hydraulikantriebsvorrichtung, da eine solche konstruktiv einfach in herkömmliche Kraftfahrzeuge integriert werden kann. Mittels der Hydraulikantriebsvorrichtung ist vorteilhafter Weise ein stufenloser Fahrantrieb möglich, welcher bis zum Stillstand stufenlos herunter geregelt werden kann. Besonders vorteilhaft ist somit eine extrem langsame und drehmomentstarke Fahrt eines mit dem vorliegenden Fahrzeugantrieb ausgerüsteten Kraftfahrzeugs möglich.

Insofern wird die Aufgabe der Erfindung auch von einem schienenungebundenen Fahrzeug mit einem Fahrzeugantrieb oder einem schienengebundenen Fahrzeug mit einem Fahrzeugantrieb gelöst, bei welchen die Fahrzeuge einen Fahrzeugantrieb und/oder ein Verteilergetriebe nach wenigstens einem der hier genannten Merkmale aufweisen.

Der Begriff "schienenungebundenes Fahrzeug" bezeichnet im Sinne der Erfindung im Wesentlichen Straßenkraftfahrzeuge, wie beispielsweise Lastkraftfahrzeuge oder Nutzkraftfahrzeuge. Insofern kann ein schienenungebundenes Fahrzeug im Gegensatz zu einem schienengebundenen Fahrzeug eine beliebige Fahrtrichtung einschlagen. Diese können nicht nur auf Straßen sondern auch auf unbefestigten Wegen oder Geländen eingesetzt werden.

Die Aufgabe der Erfindung wird darüber hinaus insbesondere auch dadurch vorteilhaft gelöst, wenn der Fahrzeugantrieb einen die weitere Antriebsvorrichtung aufweisenden Kriechfahrtantrieb umfasst. Wie bereits beschrieben, kann mittels einer insbesondere hydraulisch betriebenen alternativen Antriebsvorrichtung eine extrem langsame Kriechfahrt an einem Fahrzeug bereitgestellt werden, welche jedoch eine trotzdem sehr drehmomentstarke Antriebsleistung gewährleisten kann. Außerdem kann die Hydraulikantriebsvorrichtung konstruktiv einfach an bestehende Fahrzeugantriebe nachgerüstet werden.

Eine bevorzugte Ausführungsvariante der vorliegenden Erfindung sieht vor, dass das wenigstens eine Verteilergetriebe sowohl einem ersten Treibwelleneingang für das Fahrgetriebe als auch einen zweiten Treibwelleneingang für die weitere Antriebsvorrichtung aufweist. Vorzugsweise sind die beiden Treibwelleneingänge schaltbar, sodass vorzugsweise immer nur eine Antriebseinrichtung das Verteilergetriebe antreiben kann. Jeder der Treibwelleneingänge verfügt über eine eigene Eingangswelle.

Es versteht sich, dass hinsichtlich unterschiedlicher Kraftfahrzeuge an speziell geforderte Ansprüche konzipierte Verteilergetriebe hergestellt werden können.

Vorteilhafter Weise können vorliegend jedoch auch herkömmliche Verteilergetriebe verwendet werden, da sie fabrikseitig oftmals neben einem Hauptantriebswelleneingang hinsichtlich des Fahrgetriebes noch über eine Revisionsöffnung mit Zugriff auf eine Zwischenwelle verfügen, der bislang jedoch unbenutzt und nun vorteilhafter Weise als Nebenwellenantriebseingang nutzbar ist.

Somit wird die Aufgabe der Erfindung auch von einem Verfahren zum Betreiben eines eine Brennkraftmaschine aufweisenden Fahrzeugs gelöst, bei welchem eine durch die Brennkraftmaschine bereitgestellte Antriebsleistung mittels eines Verteilergetriebes an verschiedene Abtriebseinrichtungen verteilt wird und bei welchen mittels der Brennkraftmaschine sowohl das Fahrzeug als auch ein dem Fahrzeug zugeordnetes Arbeitsgerät angetrieben werden kann, wobei sich das Verfahren dadurch auszeichnet, dass eine Eingangswelle eines ersten Treibwelleneingangs des Verteilergetriebes mittels eines Abtriebswellenelements eines Fahrgetriebes und eine Eingangswelle eines weiteren Treibwelleneingangs des Verteilergetriebes mittels eines Abtriebswellenelements einer weiteren Antriebsvorrichtung angetrieben werden.

Mittels des vorliegenden Verfahrens kann ein Verteilergetriebe eines Fahrzeugs vielfältiger und damit auch vorteilhafter betrieben werden.

Darüber hinaus ist es baulich besonders vorteilhaft, wenn die beiden Treibwelleneingänge an einer gemeinsamen Treibwelleneingangsseite angeordnet sind. Durch einen derartigen konstruktiven Aufbau, kann der vorliegende Fahrzeugantrieb besonders kompakt gebaut werden.

Je nach Kundenanforderung kann eine der beiden Treibwelleneingänge des Verteilergetriebes jedoch auch gegenüberliegend an verschiedenen Seiten des Verteilergetriebes vorteilhaft angeordnet sein.

Eine besonders bevorzugte Ausführungsvariante sieht vor, dass die weitere Antriebsvorrichtung wenigstens einen Hydraulikmotor und/oder wenigstens eine Hydraulikpumpe umfasst. Beispielsweise wird eine Hydraulikpumpe hierbei unmittelbar von einer Abtriebswelle des Fahrgetriebes angetrieben. Die Hydraulikpumpe kann hierbei über eine entsprechende Hydraulikleitung einen verteilergetriebeseitig angeordneten Hydraulikmotor antreiben, welcher dann letztendlich eine der Eingangswellen des Verteilergetriebes antreibt. Hierdurch können vorteilhafter Weise konstruktiv auch größere und für starre Antriebsstrangwellen ungünstig verlaufene Übertragungswege zwischen einem Antriebsmotor und dem Verteilergetriebe überbrückt werden.

Insofern ist es konstruktiv zudem vorteilhaft, wenn die weitere Antriebsvorrichtung zwischen dem Fahrgetriebe und dem wenigstens einem Verteilergetriebe wirkend angeordnet ist.

Es versteht sich, dass insbesondere die Hydraulikantriebsvorrichtung lediglich mit einem Hydraulikmotor ausgerüstet sein kann. Bedarfsweise kann die Hydraulikantriebsvorrichtung jedoch auch mehr als zwei Hydraulikmotoren umfassen.

Dies kann beispielsweise der Fall sein, wenn der Fahrzeugantrieb mehr als ein Verteilergetriebe aufweist, welche zumindest teilweise mittels einer Hydraulikantriebsvorrichtung bzw. mittels Hydraulikmotoren hiervon angetrieben werden sollen.

Die weitere Antriebsvorrichtung kann konstruktiv besonders einfach angetrieben werden, wenn die weitere Antriebsvorrichtung mittels der Brennkraftmaschine antreibbar in dem Antriebsstrang angeordnet ist.

In diesem Zusammenhang sieht eine bevorzugte Verfahrensvariante vor, dass die weitere Antriebsvorrichtung von der Brennkraftmaschine angetrieben wird.

Ist darüber hinaus zwischen der weitere Antriebsvorrichtung und dem wenigstens einen Verteilergetriebe ein Planetengetriebe zum Reduzieren einer Motordrehzahl angeordnet, kann die Drehzahl beispielsweise eines relativ hoch drehenden Ölmotors konstruktiv sehr einfach auf eine für das Verteilergetriebe vorteilhafte Antriebsdrehzahl reduziert werden.

Darüber hinaus ist es vorteilhaft, wenn eine Antriebseinrichtung eine Zapfwelle zum Antreiben eines Arbeitsgerätes oder dergleichen umfasst.

Ebenso ist es vorteilhaft, wenn eine Abtriebseinrichtung eine Kardanwelle umfasst.

Damit Abtriebseinrichtungen des vorliegenden Fahrantriebs problemlos wahlweise über eine ausgangsseitige Fahrgetriebeabtriebswelle oder von der weitere Antriebsvorrichtung angetrieben werden können, ist es vorteilhaft, wenn eine erste dem Verteilergetriebe nachgeordnete Abtriebseinrichtung wenigstens eine zweite dem Verteilergetriebe nachgeordnete Abtriebseinrichtung voneinander entkoppelbar sind.

Vorteilhafter Weise ist es vorliegend möglich, dass eine besonders langsame Kriechfahrt mittels der Hydraulikantriebsvorrichtung über die zweite Eingangswelle bzw. die Zwischenwelle des Verteilergetriebes bewerkstelligt wird, während der Betrieb der Zapfwelle mittels vollem Drehmoment der Brennkraftmaschine über die erste Eingangswelle des Verteilergetriebes sichergestellt ist. Hierzu muss lediglich das Verteilerwelle derart eingestellt werden, dass die Antriebsleistung der Brennkraftmaschine direkt auf die Abtriebseinrichtung mit der Zapfwelle durchgeschaltet ist und die Antriebsleistung der Hydraulikantriebsvorrichtung auf die Abtriebseinrichtungen mit den Kardanwellen des Fahrantriebs geleitet wird.

Weitere Vorteile, Ziele und Eigenschaften der Erfindung werden anhand der anliegenden Zeichnung und nachfolgender Beschreibung erläutert, in welchen beispielhaft Fahrzeugantriebe mit einer Brennkraftmaschine und erfindungsgemäß mit einer weiteren Antriebsvorrichtung in Gestalt einer Hydraulikantriebsvorrichtung zum Treiben von in Lastkraftwagen verbauten Verteilergetrieben dargestellt und beschrieben sind.

In der Zeichnung zeigen:
- Fig. 1: schematisch eine Seitenansicht eines LKW umfassend ein Fahrzeugantrieb mit einer Brennkraftmaschine und mit einem von einer Hydraulikantriebsvorrichtung zusätzlich treibbaren Verteilergetriebe in einen ersten Fahrmodus ohne Zuhilfenahme eines Hydraulikmotors der Hydraulikantriebsvorrichtung zum Treiben des Verteilergetriebes;
- Fig. 2: schematisch eine weitere Seitenansicht des LKW aus der Figur 1 in einem weiteren Fahrmodus unter Zuhilfenahme der Hydraulikantriebsvorrichtung zum zusätzlichen Treiben des Verteilergetriebes;
- Fig. 3: schematisch eine Seitenansicht eines weiteren LKW umfassend einen Fahrzeugantrieb mit einer Brennkraftmaschine und einer Hydraulikantriebsvorrichtung zum zusätzlichen Treiben eines Verteilergetriebes;
- Fig. 4: schematisch eine Aufsicht des LKW aus der Fig. 3; und
- Fig. 5: schematisch eine Seitenansicht eines LKW mit einem herkömmlichen Fahrzeugantrieb ohne eine Hydraulikantriebsvorrichtung zum zusätzlichen Treiben eines Verteilergetriebes.

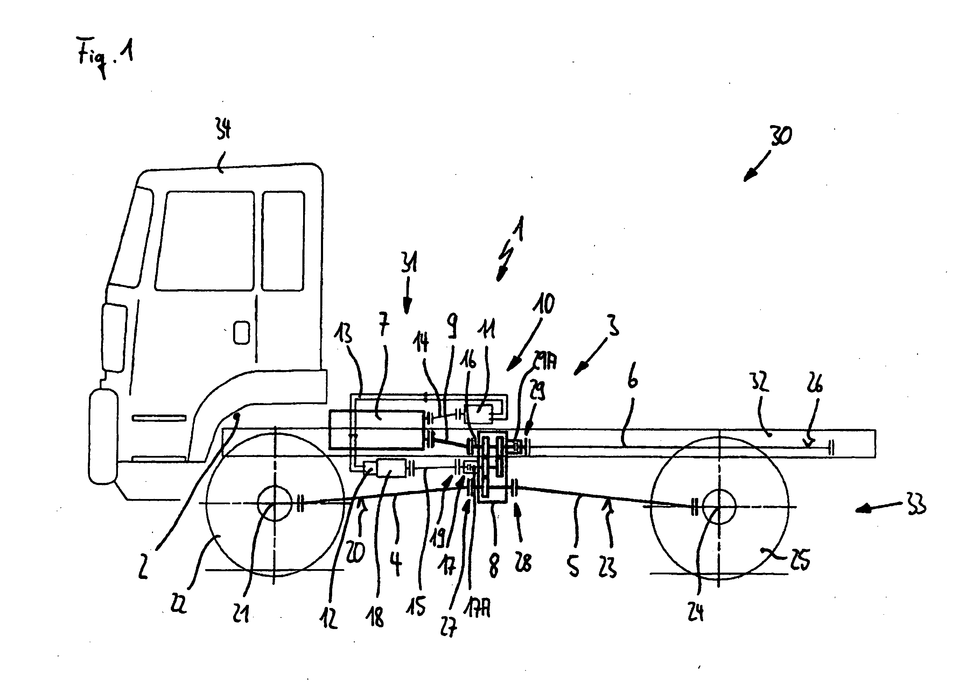

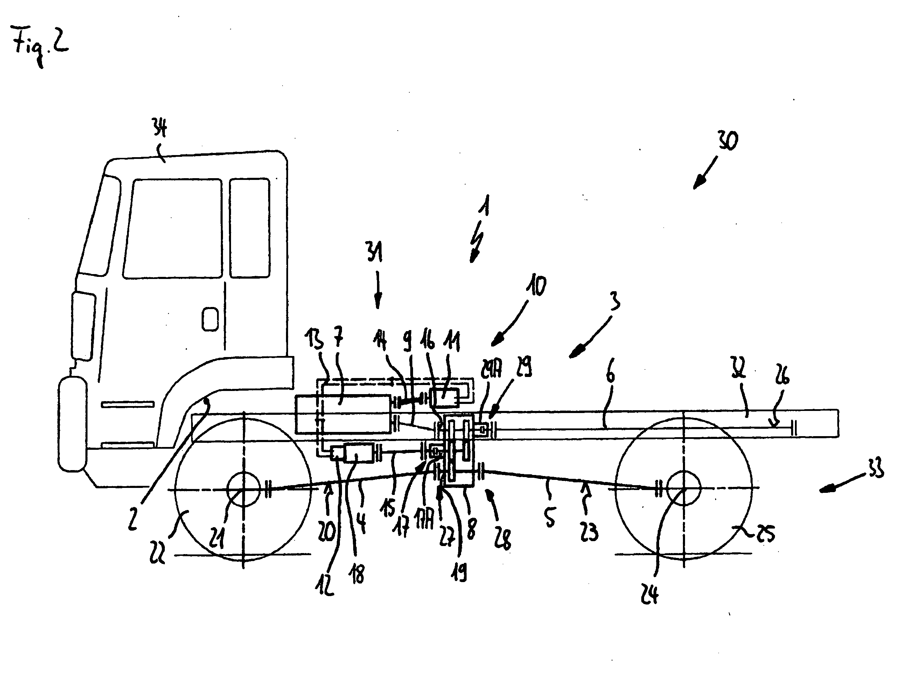

Der in den Figuren 1 und 2 gezeigte Fahrzeugantrieb 1 umfasst eine Brennkraftmaschine 2 zum Bereitstellen einer Antriebsleistung, einen Antriebsstrang 3 zum Übertragen der Antriebsleistung an mehrere Abtriebseinrichtungen 4, 5 und 6, ein Fahrgetriebe 7 zum Wählen von Antriebsübersetzungen und ein Verteilergetriebe 8 zum Verteilen der Antriebsleistung an die Abtriebseinrichtung 4, 5 und 6.

Da es sich in dem vorliegenden ersten Ausführungsbeispiel sowohl bei dem Fahrgetriebe 7 als auch bei dem Verteilergetriebe 8 um herkömmliche Getriebe handelt, wird auf deren Funktionsweise und insbesondere innere Getriebeaufbauten hier nicht weiter eingegangen.

Das Verteilergetriebe 8 ist mittels eines Fahrgetriebeabtriebswellenelements 9 des Fahrgetriebes 7 treibbar in dem vorliegenden Antriebsstrang 3 angeordnet.

Erfindungsgemäß weist der vorliegende Fahrzeugantrieb 1 zum kumulativen oder alternativen Treiben des Verteilergetriebes 8 eine Hydraulikantriebsvorrichtung 10 auf, die sich insbesondere durch eine Hydraulikpumpe 11, einen Hydraulikmotor 12 und eine diese verbindende Hydraulikleitung 13 umfasst.

Hierbei ist die Hydraulikpumpe 11 über ein weiteres Fahrgetriebeabtriebswellenelement 14 antreibbar in dem Antriebsstrang angeordnet.

Insofern ist die gesamte Hydraulikantriebsvorrichtung 10 über das Fahrgetriebe 7 mittels der vorhandenen Brennkraftmaschine 2 antreibbar.

Die durch die Hydraulikantriebsvorrichtung 10 bereitgestellte Antriebsleistung wird mittels eines Hydraulikmotorabtriebswellenelements 15 an das Verteilergetriebe 8 übertragen.

Konstruktiv besonders einfach kann dies geschehen, wenn die Antriebsleistung einerseits von dem Fahrgetriebeabtriebswellenelement 9 wie herkömmlich über einen ersten Treibwelleneingang 16 des Verteilergetriebes 8 und andererseits kumulativ oder alternativ über einen zweiten vorhandenen Treibwelleneingang 17 an einer Revisionsöffnung einer Zwischenwelle des Verteilergetriebes 8 übertragen wird.

Eine derartige Schaltbarkeit der beiden Treibwelleneingänge 16 und 17 kann jedoch auch mittels weiterer Kupplungseinrichtungen 17A (hier nur explizit beziffert) erzielt werden, die zwischen dem Fahrgetriebe 7 und dem Verteilergetriebe 8 bzw. der Hydraulikantriebsvorrichtung 10 und/oder der Hydraulikantriebsvorrichtung 10 und dem Verteilergetriebe 8 wirkend angeordnet sind.

Da insbesondere der Hydraulikmotor 12 der Hydraulikantriebsvorrichtung 10 in der Regel mit einer relativ hohen Drehzahl betrieben wird, ist dahinter noch ein Planetengetriebe 18 zum zusätzlichen Reduzieren einer Hydraulikmotordrehzahl am zweiten Treibwelleneingang 17 angeordnet.

In diesem ersten Ausführungsbeispiel sind die beiden Treibwelleneingänge 16 und 17 konstruktiv vorteilhaft an einer gemeinsamen Treibwelleneingangsseite 19 angeordnet. Insofern kann vorteilhafter Weise ein idealweise standardisiertes Verteilergetriebe 8 verwendet werden.

Die erste Abtriebseinrichtung 4 ist in diesem Ausführungsbeispiel eine Kardanwelle 20 zum Antreiben der Vorderradachse 21 bzw. der Vorderräder 22 (hier nur exemplarisch beziffert). Bei der zweiten Abtriebseinrichtung 5 handelt es sich entsprechend um eine hintere Kardanwelle 23 zum Antreiben einer Hinterradachse 24 bzw. der Hinterräder 25 (hier nur exemplarisch beziffert). Bei der dritten Abtriebseinrichtung 6 handelt es sich um eine Zapfwelle 26 zum Antreiben eines hier nicht gezeigten Arbeitsgerätes.

Damit nun das Verteilergetriebe 8 und die dahinter wirkenden Abtriebseinrichtungen 4, 5 und 6 sowohl von dem Fahrgetriebe 7 als auch von der Hydraulikantriebsvorrichtung 10 gleichzeitig aber getrennt voneinander angetrieben werden können, können insbesondere die beiden Treibwelleneingänge 16 und 17 sowie entsprechende Treibwellenausgänge 27, 28 und 29 des Verteilergetriebes 8 mechanisch voneinander entkoppelt werden. Am Treibwellenausgang 29 ist noch eine Kupplung 29A vorgesehen, um die Zapfwelle 26 vom Antrieb zu entkoppeln.

Vorteilhafter Weise kann mit der Hydraulikantriebsvorrichtung 10 eine extrem langsame Fahrt des hier dargestellten LKW 30 ermöglicht werden, wenn der Vortrieb des LKW 30, wie in dem nach der Darstellung gemäß der Figur 2 dargestellten weiteren Fahrmodus, mittels der Hydraulikantriebsvorrichtung 10 bewerkstelligt wird.

In dem weiteren Fahrmodus (siehe Figur 2) wird nämlich mittels der von der Brennkraftmaschine 2 bereitgestellten Antriebsleistung über das weitere Fahrgetriebeabtriebswellenelement 14 die Hydraulikantriebsvorrichtung 10 betrieben. Diese wiederum gibt die Antriebsleistung 10 über das Planetengetriebe 18 und den zweiten Treibwelleneingang 17 weiter an das Verteilergetriebe 8. Über den zweiten Treibwelleneingang 17 werden dann über den ersten Treibwellenausgang 27 und den zweiten Treibwellenausgang 28 die vordere und hintere Kardanwelle 20 bzw. 23 angetrieben. Gleichzeitig ist es möglich, mittels des ersten Fahrgetriebeabtriebswellenelements 9 über den ersten Treibwelleneingang 16 und den dritten Treibwellenausgang 29 des Verteilergetriebes 8 unter Umgehung der Hydraulikantriebsvorrichtung 10 die Zapfwelle 26 anzutreiben.

Insofern stellt die vorliegende Hydraulikantriebsvorrichtung 10 einen extrem effektiven Kriechfahrtantrieb 31 des Fahrzeugantriebs 1 des vorliegenden gezeigten LKW 30 dar.

Hingegen wird in dem herkömmlichen Fahrmodus (siehe Figur 1) das Verteilergetriebe 8 ausschließlich über das erste Fahrgetriebeabtriebswellenelements 9 des Fahrgetriebes 7 angetrieben, wobei auch hierbei sowohl die Kardanwellen 20 und 23 als auch die Zapfwelle 26 gleichzeitig betreibbar sind.

Vorteilhafterweise handelt es sich bei dem vorliegenden Verteilergetriebe 8 um ein Standardverteilergetriebe herkömmlicher Bauart, sodass sich die Modifikationen an dem Fahrzeugantrieb 1 im Wesentlichen lediglich auf das Hinzufügen der Hydraulikantriebsvorrichtung 10 beschränkt. Die meisten Verteilergetriebe 8 herkömmlicher Bauart verfügen üblicherweise standardmäßig bereits über den zweiten, meist jedoch ungenutzten Treibwelleneingang 17, sodass die Integration der Hydraulikantriebsvorrichtung 10 in einen bestehenden Fahrzeugantrieb 1 konstruktiv besonders einfach möglich ist.

Gleiches gilt hinsichtlich des Fahrgetriebes 7 in Bezug auf das weitere Fahrgetriebeabtriebswellenelement 14 zum Treiben des ersten Hydraulikmotors 11 der Hydraulikantriebsvorrichtung 10.

Insofern stellt der vorliegende Fahrzeugantrieb 1 eine sehr kostengünstig bereitstellbare Alternative zu bekannten Fahrzeugantrieben dar, welche für eine langsame Fahrt eines Kraftfahrzeugs ausgelegt sind.

Der LKW 30 umfasst hierbei noch ein Chassis 32, welches neben dem Fahrzeugantrieb 1 insbesondere einerseits noch ein Fahrwerk 33 und andererseits noch eine Fahrzeugkabine 34 trägt.

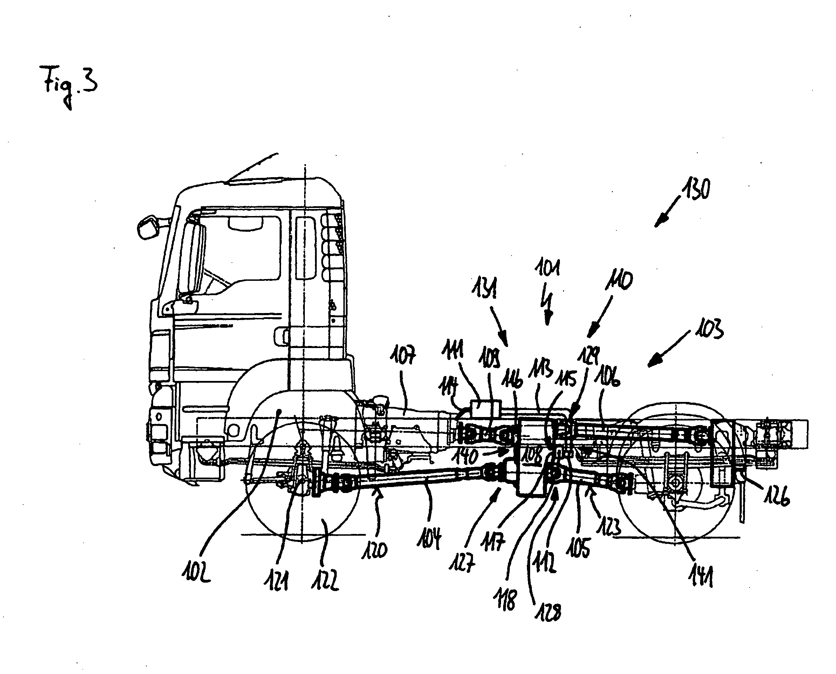

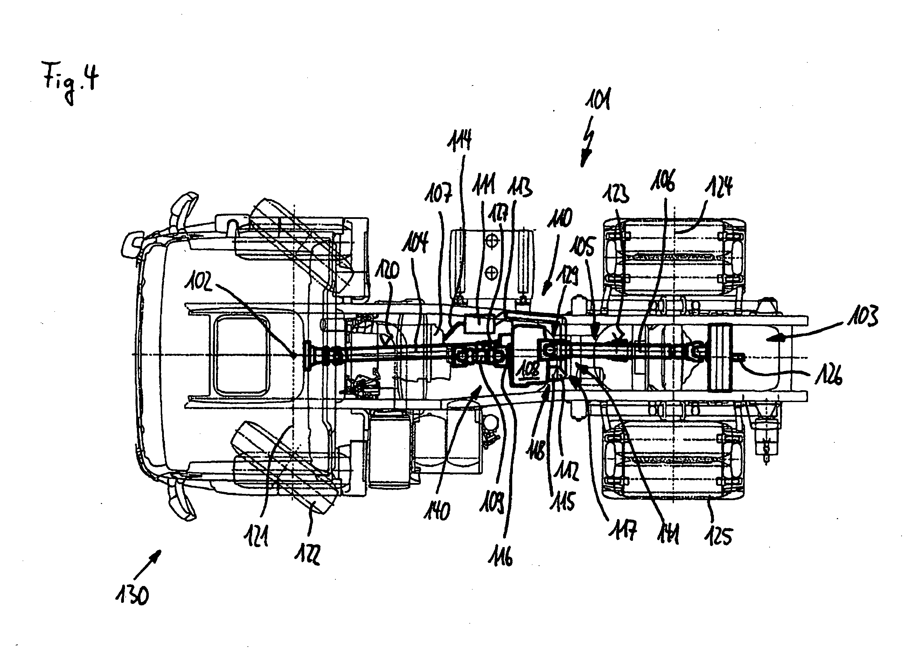

Der in den Figuren 3 und 4 gezeigte weitere LKW 130 ist ebenfalls mit einem erfindungsgemäßen Fahrzeugantrieb 101 ausgerüstet, welcher einen Kriechfahrtantrieb 131 auf Basis einer Hydraulikantriebsvorrichtung 110 umfasst, sodass der Fahrzeugantrieb 101 nahezu baugleich mit dem Fahrzeugantrieb 1 aus dem Ausführungsbeispiel gemäß der Figuren 1 und 2 aufgebaut ist.

Insofern weist der Fahrzeugantrieb 101 eine Brennkraftmaschine 102, einen Antriebsstrang 103, erste, zweite und dritte Abtriebseinrichtungen 104, 105 und 106 auf sowie ein Fahrgetriebe 107 und ein Verteilergetriebe 108.

Die Hydraulikantriebsvorrichtung 110 zeichnet sich ebenfalls durch eine Hydraulikpumpe 111 und einen Hydraulikmotor 112 mit einem Hydraulikmotorabtriebswellenelement 115 sowie eine diese verbindende Hydraulikleitung 113 aus.

Das Verteilergetriebe 108 unterscheidet sich von dem Verteilergetriebe 8 aus dem ersten Ausführungsbeispiel jedoch dadurch, dass ein erster Treibwelleneingang 116 und ein zweiter Treibwelleneingang 117 nicht an einer gemeinsamen Treibwelleneingangsseite 19 (siehe Figuren 1 und 2) angeordnet sind, sondern der erste Treibwelleneingang 116 ist an einer Treibwelleneingangsvorderseite 140 und der zweite Treibwelleneingang 117 ist im Bereich einer Revisionsöffnung für eine Zwischenwelle an einer Treibwelleneingangsrückseite 141 des Verteilergetriebes 108 angeordnet.

Das Fahrgetriebe 107 zeichnet sich zum Treiben des Verteilergetriebes 108 wieder durch ein erstes Fahrgetriebeabtriebswellenelement 109 und ein weiteres Fahrgetriebeabtriebswellenelement 114 aus.

Ansonsten ist zwischen dem Hydraulikmotor 112 und dem zweiten Treibwelleneingang 117 ein Planetengetriebe 118 vorgesehen, um eine Hydraulikmotordrehzahl des Hydraulikmotors 112 am zweiten Treibwelleneingang 117 zusätzlich entsprechend reduzieren zu können, sodass das Verteilergetriebe 108 hinsichtlich der ersten Abtriebseinrichtung 104 und der zweiten Abtriebseinrichtung 105 extrem langsam drehen kann, sodass hierdurch auch eine extrem langsame Kriechfahrt des LKW 130 möglich ist.

Des Weiteren umfasst die erste Abtriebseinrichtung 104 eine vordere Kardanwelle 120 zum Antreiben einer Vorderachse 121 bzw. der Vorderräder 122. Entsprechend umfasst die zweite Abtriebseinrichtung 105 eine hintere Kardanwelle 123 zum Antreiben einer Hinterachse 124 sowie von entsprechenden Hinterrädern 125. Die dritte Antriebseinrichtung 106 weist eine Zapfwelle 126 zum Antreiben eines hier nicht weiter dargestellten Arbeitsgerätes auf, welches von dem LKW 130 angetrieben werden kann.

Die zuvor beschriebenen Abtriebseinrichtungen 104, 105 und 106 sind entsprechend zugeordneten Treibwellenausgängen 127, 128 und 129 des Verteilergetriebes 108 nachgeschaltet.

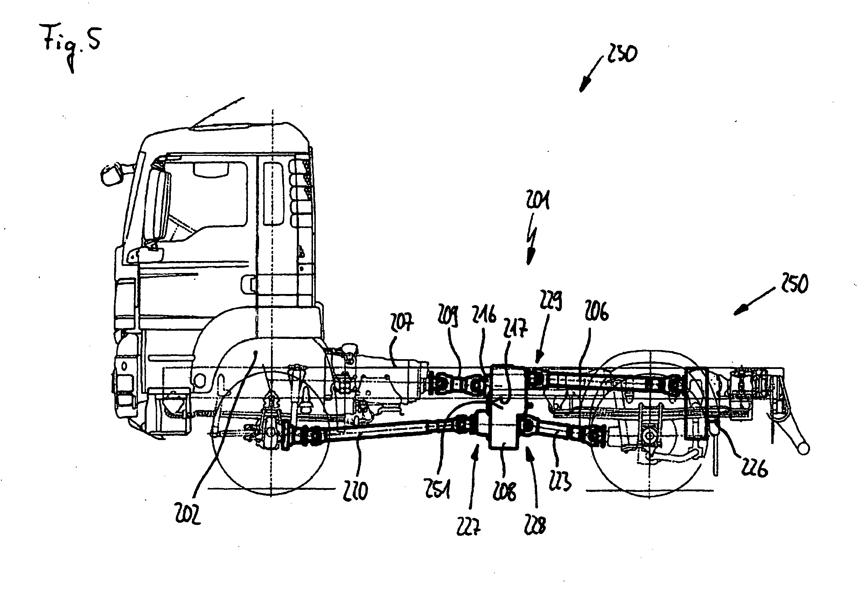

Zum Vergleich gegenüber der erfindungsgemäßen Fahrzeugantriebe 1 und 101 ist in der Darstellung gemäß der Fig. 5 ein LKW 230 mit einem herkömmlichen Fahrzeugantrieb 250 gezeigt, dessen Verteilergetriebe 208 in bisher bekannter Weise lediglich über ein Fahrgetriebe 207 mittels einer Brennkraftmaschine 202 angetrieben werden kann. Insofern ist an dem Verteilergetriebe 208 auch lediglich nur ein erster Treibwelleneingang 216 belegt. Ein zweiter verfügbarer Treibwelleneingang 217 ist hingegen lediglich mittels einer Abdeckung 251 einer Revisionsöffnung verschlossen und insofern nicht in Gebrauch. Jedenfalls umfasst der Fahrzeugantrieb 250 ein Fahrgetriebeabtriebswellenelement 209, mittels welchem es mit dem Verteilergetriebe 208 drehmomentenschlüssig verbunden ist. Das Verteilergetriebe 208 verfügt ebenfalls über drei Treibwellenausgänge 227, 228 und 229 zum Antreiben einer vorderen Kardanwelle 220, einer hinteren Kardanwelle 223 und weitere Abtriebseinrichtung 206 umfassend eine Zapfwelle 226.

Zwar ist mit dem herkömmlichen Fahrzeugantrieb 250 ebenfalls eine Kriechfahrt des LKW 230 möglich, jedoch nicht so extrem langsam und drehmomentstark wie es mit den beiden zuvor beschriebenen erfindungsgemäßen Fahrzeugantrieben 1 bzw. 101 der Fall ist.

Es versteht sich, dass es sich bei den vorstehend erläuterten Ausführungsbeispielen lediglich um erste Ausgestaltungen des erfindungsgemäßen Fahrzeugantriebs handelt. Insofern beschränkt sich die Ausgestaltung der Erfindung nicht auf diese Ausführungsbeispiele.

### Bezugszeichenliste

- 1: Fahrzeugantrieb
- 2: Brennkraftmaschinen
- 3: Antriebsstrang
- 4: erste Abtriebseinrichtung
- 5: zweite Abtriebseinrichtung
- 6: dritte Abtriebseinrichtung
- 7: Fahrgetriebe
- 8: Verteilergetriebe
- 9: Fahrgetriebeabtriebswellenelement
- 10: Hydraulikantriebsvorrichtung
- 11: Hydraulikpumpe
- 12: Hydraulikmotor
- 13: Hydraulikleitung
- 14: weiteres Fahrgetriebeabtriebswellenelement
- 15: Hydraulikmotorabtriebswellenelement
- 16: erster Treibwelleneingang
- 17: zweiter Treibwelleneingang
- 17A: Kupplungseinrichtung
- 18: Planetengetriebe
- 19: gemeinsame Treibwelleneingangsseite
- 20: vordere Kardanwelle
- 21: Vorderradachse
- 22: Vorderräder
- 23: hintere Kardanwelle
- 24: Hinterachse
- 25: Hinterräder
- 26: Zapfwelle
- 27: erster Treibwellenausgang
- 28: zweiter Treibwellenausgang
- 29: dritter Treibwellenausgang
- 29A: Kupplung
- 30: LKW
- 31: Kriechfahrtantrieb
- 32: Chassis
- 33: Fahrwerk
- 34: Fahrzeugkabine

- 101: Fahrzeugantrieb
- 102: Brennkraftmaschinen
- 103: Antriebsstrang
- 104: erste Abtriebseinrichtung
- 105: zweite Abtriebseinrichtung
- 106: dritte Abtriebseinrichtung
- 107: Fahrgetriebe
- 108: Verteilergetriebe
- 109: Fahrgetriebeabtriebswellenelement
- 110: Hydraulikantriebsvorrichtung
- 111: Hydraulikpumpe
- 112: Hydraulikmotor
- 113: Hydraulikleitung
- 114: weiteres Fahrgetriebeabtriebswellenelement
- 115: Hydraulikmotorabtriebswellenelement
- 116: erster Treibwelleneingang
- 117: zweiter Treibwelleneingang
- 118: Planetengetriebe
- 120: vordere Kardanwelle
- 121: Vorderachse
- 122: Vorderräder
- 123: hintere Kardanwelle
- 124: Hinterachse
- 125: Hinterräder
- 126: Zapfwelle
- 127: erster Treibwellenausgang
- 128: zweiter Treibwellenausgang
- 129: dritter Treibwellenausgang
- 130: LKW
- 131: Kriechfahrtantrieb
- 140: Treibwelleneingangsvorderseite
- 141: Treibwelleneingangsrückseite

- 201: Fahrzeugantrieb
- 202: Brennkraftmaschine
- 206: weitere Abtriebseinrichtung
- 207: Fahrgetriebe
- 208: Verteilergetriebe
- 209: Fahrgetriebeabtriebswellenelement
- 216: erster Treibwelleneingang
- 217: zweiter Treibwelleneingang
- 220: vordere Kardanwelle
- 223: hintere Kardanwelle
- 226: Zapfwelle
- 227: erster Treibwellenausgang
- 228: zweiter Treibwellenausgang
- 229: dritter Treibwellenausgang
- 230: LKW
- 250: herkömmlicher Fahrzeugantrieb
- 251: Abdeckung

## Patentansprüche

1. Fahrzeugantrieb (1; 101) mit einer Brennkraftmaschine (2; 102) zum Bereitstellen einer Antriebsleistung, mit einem Antriebsstrang (3; 103) zum Übertragen der Antriebsleistung an mehrere Abtriebseinrichtungen (4, 5, 6; 104, 105, 106), mit einem Fahrgetriebe (7; 107) zum Wählen von Antriebsübersetzungen und mit wenigstens einem Verteilergetriebe (8; 108) zum Verteilen der Antriebsleistung an die Abtriebseinrichtungen (4, 5, 6; 104, 105, 106), bei welchem das wenigstens eine Verteilergetriebe (8; 108) mittels eines Abtriebswellenelements (9; 109) des Fahrgetriebes (7; 107) treibbar in dem Antriebsstrang (3; 103) angeordnet ist,
**dadurch gekennzeichnet,dass**
der Fahrzeugantrieb (1; 101) zum kumulativen oder alternativen Treiben des wenigstens einen Verteilergetriebes (8; 108) einen eine weitere Antriebsvorrichtung (10; 110) aufweisenden Kriechfahrtantrieb (31; 131) umfasst, wobei die weitere Antriebsvorrichtung (10; 110) eine Hydraulikantriebsvorrichtung umfasst, um eine besonders langsame Kriechfahrt zu realisieren, während das Fahrgetriebe (7; 107) gleichzeitig mittels des Verteilergetriebes (8; 108) unter Umgehung der Hydraulikantriebsvorrichtung mit einer Zapfwelle (26; 126) zum Antreiben eines Arbeitsgerätes wirkverbindbar ist.

2. Fahrzeugantrieb (1; 101) nach Anspruch 1,
**dadurch gekennzeichnet,dass**
das wenigstens eine Verteilergetriebe (8; 108) sowohl einen ersten Treibwelleneingang (16; 116) für das Fahrgetriebe (7; 107) als auch einen zweiten Treibwelleneingang (17; 117) für die weitere Antriebsvorrichtung (10; 110) aufweist, wobei insbesondere die beiden Treibwelleneingänge (16, 17; 116, 117) schaltbar sind.

3. Fahrzeugantrieb (1) nach Anspruch 1 oder 2,
**dadurch gekennzeichnet, dass**
die beiden Treibwelleneingänge (16, 17) an einer gemeinsamen Treibwelleneingangsseite (19) angeordnet sind.

4. Fahrzeugantrieb (1; 101) nach einem der Ansprüche 1 bis 3,
**dadurch gekennzeichnet, dass**
die weitere Antriebsvorrichtung (10; 110) mehr als einen Hydraulikmotor umfasst.

5. Fahrzeugantrieb (1; 101) nach einem der Ansprüche 1 bis 4,
**dadurch gekennzeichnet,dass**
die weitere Antriebsvorrichtung (10; 110) mittels der Brennkraftmaschine (2; 102) antreibbar in dem Antriebsstrang angeordnet ist.

6. Fahrzeugantrieb (1; 101) nach einem der Ansprüche 1 bis 5,
**dadurch gekennzeichnet, dass**
die weitere Antriebsvorrichtung (10; 110) zwischen dem Fahrgetriebe (7; 107) und dem wenigstens einen Verteilergetriebe (8; 108) wirkend angeordnet ist.

7. Fahrzeugantrieb (1; 101) nach einem der Ansprüche 1 bis 6,
**dadurch gekennzeichnet, dass**
zwischen der weiteren Antriebsvorrichtung (10; 110) und dem wenigstens einen Verteilergetriebe (8; 108) ein Planetengetriebe (18; 118) zum Reduzieren einer Hydraulikmotordrehzahl angeordnet ist.

8. Fahrzeugantrieb (1; 101) nach einem der Ansprüche 1 bis 7,
**dadurch gekennzeichnet, dass**
eine erste dem Verteilergetriebe (8; 108) nachgeordnete Abtriebseinrichtung (6) und wenigstens eine zweite dem Verteilergetriebe (8; 108) nachgeordnete Abtriebseinrichtung (4, 5) voneinander entkoppelbar sind.

9. Verteilergetriebe (8; 108) mit einem Treibwelleneingang zum Treiben des Verteilergetriebes mittels einer Antriebsvorrichtung (2; 102) eines Fahrzeugantriebs (1; 101) und mit wenigstens einem Treibwellenausgang (27, 28, 29; 227, 228, 229) zum Treiben wenigstens einer Abtriebseinrichtung (4, 5, 6; 104, 105, 106), **dadurch gekennzeichnet, dass** das Verteilergetriebe (8; 108) zumindest einen weiteren Treibwelleneingang (17; 117) für eine weitere Antriebsvorrichtung (10; 110) aufweist, wobei die beiden Treibwelleneingänge (16, 17; 116, 117) schaltbar sind.

10. Schienenungebundenes Fahrzeug (30; 130) mit einem Fahrzeugantrieb (1; 101) oder schienengebundenes Fahrzeug mit einem Fahrzeugantrieb (1; 101), **gekennzeichnet dadurch**
einen Fahrzeugantrieb (1; 101) nach einem der Ansprüche 1 bis 8 und/oder ein Verteilergetriebe (8; 108) nach Anspruch 9.

11. Verfahren zum Betreiben eines eine Brennkraftmaschine (2; 102) aufweisenden Fahrzeugs (30; 130), bei welchem eine durch die Brennkraftmaschine (2; 102) bereitgestellte Antriebsleistung mittels eines Verteilergetriebes (8; 108) an verschiedene Abtriebseinrichtungen (4, 5, 6; 104, 105, 106) verteilt wird und bei welchem mittels der Brennkraftmaschine (2; 102) sowohl das Fahrzeug (30; 130) selbst als auch ein dem Fahrzeug (30; 130) zugeordnetes Arbeitsgerät angetrieben werden kann, und bei welchem eine Eingangswelle eines ersten Treibwelleneingangs (16; 116) des Verteilergetriebes (8; 108) mittels eines Abtriebswellenelements (9; 109) eines Fahrgetriebes (7; 107) und eine Eingangswelle eines weiteren Treibwelleneingangs (17; 117) des Verteilergetriebes (8; 108) mittels eines Abtriebswellenelements (15; 115) einer weiteren Antriebsvorrichtung (10; 110) angetrieben werden,
**dadurch gekennzeichnet, dass**
durch den ersten Treibwelleneingang (16; 116) eine Zapfwelle (26; 126) zum Antreiben eines Arbeitsgerätes und gleichzeitig durch den zweiten Treibwelleneingang (17; 117) Kardanwellen (20, 23; 120, 123) eines Fahrantriebs des Fahrzeuges (30; 130) angetrieben werden.

12. Verfahren nach Anspruch 11,
**dadurch gekennzeichnet, dass**
die Eingangswelle des weiteren Treibwelleneingangs (17; 117) von einer Hydraulikantriebsvorrichtung (10; 110) angetrieben wird.

## Claims

1. A vehicle drive (1; 101) with an internal combustion engine (2; 102) for producing drive power, with a drive train (3; 103) for transmitting the drive power to a plurality of output devices (4, 5, 6; 104, 105, 106), with a drive gear (7; 107) for selecting drive ratios and with at least one distributor gear (8; 108) for distributing the drive power to the output devices (4, 5, 6; 104, 105, 106), in which the at least one distributor gear (8; 108) is arranged in the drive train (3; 103) in a manner capable of being driven by means of an output shaft element (9; 109) of the drive gear (7; 107), **characterized in that** the vehicle drive (1; 101) comprises a crawling speed drive (31; 131) having a further drive apparatus (10; 110) for the cumulative or alternative driving of the at least one distributor gear (8; 108), wherein the further drive apparatus (10; 110) comprises an hydraulic drive apparatus in order to carry out a particularly slow crawling speed, whilst the drive gear (7; 107) is capable of being operatively connected at the same time by means of the distributor gear (8; 108) to a power take-off shaft (26; 126) for driving an operating unit whilst bypassing the hydraulic drive apparatus.

2. A vehicle drive (1; 101) according to claim 1, **characterized in that** said at least one distributor gear (8; 108) has both a first drive shaft input (16; 116) for the drive gear (7; 107) and a second drive shaft input (17; 117) for the further drive apparatus (10; 110), wherein in particular the two drive shaft inputs (16, 17; 116, 117) are capable of being switched.

3. A vehicle drive (1) according to claim 1 or 2, **characterized in that** the two drive shaft inputs (16, 17) are arranged on a common drive shaft input side.

4. A vehicle drive (1; 101) according to any one of claims 1 to 3, **characterized in that** the further drive apparatus (10; 110) comprises more than one hydraulic motor.

5. A vehicle drive (1; 101) according to any one of claims 1 to 4, **characterized in that** the further drive apparatus (10; 110) is arranged in the drive train in a manner capable of being driven by means of the internal combustion engine (2; 102).

6. A vehicle drive (1; 101) according to any one of claims 1 to 5, **characterized in that** the further drive apparatus (10; 110) is arranged so as to be operative between the drive gear (7; 107) and the at least one distributor gear (8; 108).

7. A vehicle drive (1; 101) according to any one of claims 1 to 6, **characterized in that** a planetary gear mechanism (18; 118) for reducing a hydraulic motor's rotational speed is arranged between the further drive apparatus (10; 110) and the at least one distributor gear (8; 108).

8. A vehicle drive (1; 101) according to any one of claims 1 to 7, **characterized in that** a first output device (6) arranged downstream of the distributor gear (8; 108) and at least one second output device (4, 5) arranged downstream of the distributor gear (8; 108) are capable of being decoupled from each other.

9. A distributor gear (8; 108) with a drive shaft input for driving the distributor gear by means of a drive apparatus (2; 102) of a vehicle drive (1; 101) and with at least one drive shaft output (27, 28, 29; 227, 228, 229) for driving at least one output device (4, 5, 6; 104, 105, 106), **characterized in that** the distributor gear (8; 108) has at least one further drive shaft input (17; 117) for a further drive apparatus (10; 110), wherein the two drive shaft inputs (16, 17; 116, 117) are capable of being switched.

10. A non-rail vehicle (30; 130) with a vehicle drive (1; 101) or a rail vehicle with a vehicle drive (1; 101), **characterized by** a vehicle drive (1; 101) according to any one of claims 1 to 8 and/or a distributor gear (8; 108) according to claim 9.

11. A method of operating a vehicle (30; 130) having an internal combustion engine (2; 102), in which drive power provided by the internal combustion engine (2; 102) is distributed to various output devices (4, 5, 6; 104, 105, 106) by means of a distributor gear (8; 108) and in which both the vehicle (30; 130) itself and an operating unit associated with the vehicle (30; 130) can be driven by means of the internal combustion engine (2; 102), and in which an input shaft of a first drive shaft input (16; 116) of the distributor gear (8; 108) is driven by means of an output shaft element (9; 109) of a drive gear (7; 107) and an input shaft of a further drive shaft input (17; 117) of the distributor gear (8; 108) is driven by means of an output shaft element (15; 115) of a further drive apparatus (10; 110), **characterized in that** a power take-off shaft (26; 126) for driving an operating unit is driven by the first drive shaft input (16; 116) and cardan shafts (20, 23; 120, 123) of a drive of the vehicle (30; 130) are driven at the same time by the second drive shaft input (17; 117).

12. A method according to claim 11, **characterized in that** the input shaft of the further drive shaft input (17; 117) is driven by an hydraulic drive apparatus (10; 110) .

## Revendications

1. Entraînement de véhicule (1 ; 101) avec un moteur à combustion interne (2 ; 102) pour mettre à disposition une puissance d'entraînement, avec un train d'entraînement (3 ; 103) pour la transmission de la puissance d'entraînement à plusieurs dispositifs de sortie (4, 5, 6 ; 104, 105, 106), avec une boîte de vitesses (7 ; 107) pour la sélection de rapports d'entraînement, et avec au moins une boîte de transfert (8 ; 108) pour la distribution de la puissance d'entraînement aux dispositifs de sortie (4, 5, 6 ; 104, 105, 106), la ou les boîtes de transfert (8 ; 108) étant disposées dans le train d'entraînement (3 ; 103) de manière à pouvoir être commandées par un élément d'arbre de sortie (9 ; 109) de la boîte de vitesses (7 ; 107),
**caractérisé en ce que**
ledit entraînement de véhicule (1 ; 101) comprend un entraînement de conduite tout terrain (31 ; 131) comportant un autre dispositif d'entraînement (10 ; 110) pour la commande cumulative ou alternative de la ou des boîtes de transfert (8 ; 108), l'autre dispositif d'entraînement (10 ; 110) comprenant un dispositif d'entraînement hydraulique pour obtenir une conduite tout terrain particulièrement lente, cependant que la boîte de vitesses (7 ; 107) peut être simultanément fonctionnellement reliée par la boîte de transfert (8 ; 108) à un arbre de prise de force (26 ; 126) pour l'entraînement d'un outil de travail, en contournant le dispositif d'entraînement hydraulique.

2. Entraînement de véhicule (1 ; 101) selon la revendication 1,
**caractérisé en ce que**
la ou les boîtes de transfert (8 ; 108) présentent une première entrée d'arbre moteur (16 ; 116) pour la boîte de vitesses (7 ; 107) ainsi qu'une deuxième entrée d'arbre moteur (17; 117) pour l'autre dispositif d'entraînement (10 ; 110), les deux entrées d'arbre moteur (16, 17 ; 116, 117) pouvant en particulier être commutées.

3. Entraînement de véhicule (1) selon la revendication 1 ou 2,
**caractérisé en ce que**
les deux entrées d'arbre moteur (16, 17) sont disposées sur un côté (19) d'entrée d'arbre moteur commun.

4. Entraînement de véhicule (1 ; 101) selon l'une des revendications 1 à 3,
**caractérisé en ce que**
l'autre dispositif d'entraînement (10 ; 110) comprend plus d'un moteur hydraulique.

5. Entraînement de véhicule (1 ; 101) selon l'une des revendications 1 à 4,
**caractérisé en ce que**
l'autre dispositif d'entraînement (10; 110) est disposé dans la transmission de manière à être commandé par le moteur à combustion interne (2 ; 102).

6. Entraînement de véhicule (1 ; 101) selon l'une des revendications 1 à 5,
**caractérisé en ce que**
l'autre dispositif d'entraînement (10 ; 110) est disposé de manière à être fonctionnel entre la boîte de vitesses (7 ; 107) et la ou les boîtes de transfert (8 ; 108).

7. Entraînement de véhicule (1 ; 101) selon l'une des revendications 1 à 6,
**caractérisé en ce qu'**
un engrenage planétaire (18 ; 118) est disposé entre l'autre dispositif d'entraînement (10 ; 110) et la ou les boîtes de transfert (8 ; 108) pour la réduction d'une vitesse de moteur hydraulique.

8. Entraînement de véhicule (1 ; 101) selon l'une des revendications 1 à 7,
**caractérisé en ce qu'**
un premier dispositif de sortie (6) en aval de la boîte de transfert (8 ; 108) et au moins un deuxième dispositif de sortie (4, 5) en aval de la boîte de transfert (8 ; 108) peuvent être désaccouplés l'un de l'autre.

9. Boîte de transfert (8 ; 108) avec une entrée d'arbre moteur pour la commande de la boîte de transfert par un dispositif d'entraînement (2 ; 102) d'un entraînement de véhicules (1 ; 101) et avec au moins une sortie d'arbre moteur (27, 28, 29 ; 227, 228, 229) pour la commande d'au moins un dispositif de sortie (4, 5, 6 ; 104, 105, 106),
**caractérisée en ce que**
ladite boîte de transfert (8 ; 108) présente au moins une autre entrée d'arbre moteur (17 ; 117) pour un autre dispositif d'entraînement (10 ; 110), les deux entrées d'arbre moteur (16, 17 ; 116, 117) pouvant être commutées.

10. Véhicule non ferroviaire (30 ; 130) avec un entraînement de véhicule (1 ; 101) ou véhicule ferroviaire avec un entraînement de véhicule (1 ; 101),
**caractérisé par**
un entraînement de véhicule (1 ; 101) selon l'une des revendications 1 à 8 et/ou une boîte de transfert (8 ; 108) selon la revendication 9.

11. Procédé de fonctionnement d'un véhicule (30 ; 130) pourvu d'un moteur à combustion interne (2 ; 102), où une puissance d'entraînement mis à disposition par le moteur à combustion interne (2 ; 102) est distribuée à différents dispositifs de sortie (4, 5, 6 ; 104, 105, 106) au moyen d'une boîte de transfert (8 ; 108), où le véhicule (30 ; 130) en tant que tel, ainsi qu'un outil de travail associé au véhicule (30 ; 130) peuvent être entraînés au moyen du moteur à combustion interne (2 ; 102), et où un arbre d'entrée d'une première entrée d'arbre moteur (16 ; 116) de la boîte de transfert (8 ; 108) est entraîné par un élément d'arbre de sortie (9 ; 109) d'une boîte de vitesses (7 ; 107), et un arbre d'entrée d'une autre entrée d'arbre moteur (17 ; 117) de la boîte de transfert (8 ; 108) par un élément d'arbre de sortie (15 ; 115) d'un autre dispositif d'entraînement (10 ; 110),
**caractérisé en ce qu'**
un arbre de prise de force (26 ; 126) pour la commande d'un outil de travail est entraîné par la première entrée d'arbre moteur (16 ; 116), et simultanément des arbres à cardan (20, 23 ; 120, 123) d'un entraînement de roulement du véhicule (30 ; 130) par la deuxième entrée d'arbre moteur (17 ; 117).

12. Procédé selon la revendication 11,
**caractérisé en ce que**
l'arbre d'entrée de l'autre entrée d'arbre moteur (17 ; 117) est entraîné par un dispositif d'entraînement hydraulique (10 ; 110).
